(19) Europäisches Patentamt
European Patent Office
Office européen des brevets

(11) **EP 2 220 837 B1**

(12) **EUROPEAN PATENT SPECIFICATION**

(45) Date of publication and mention
of the grant of the patent:
**26.12.2012 Bulletin 2012/52**

(21) Application number: **08847022.4**

(22) Date of filing: **05.11.2008**

(51) Int Cl.:
***H04L 27/26*** *(2006.01)*

(86) International application number:
**PCT/GB2008/003723**

(87) International publication number:
**WO 2009/060183 (14.05.2009 Gazette 2009/20)**

(54) **SIGNAL DISCOVERY**

SIGNALENTDECKUNG

DÉCOUVERTE DE SIGNAL

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.11.2007 GB 0721687**

(43) Date of publication of application:
**25.08.2010 Bulletin 2010/34**

(73) Proprietor: **British Broadcasting Corporation London WC1X 8PL (GB)**

(72) Inventor: **STOTT, Jonathan, Highton Horley
Surrey RH6 9AR (GB)**

(74) Representative: **Loveless, Ian Mark
Reddie & Grose LLP
16 Theobalds Road
London WC1X 8PL (GB)**

(56) References cited:
**US-B1- 6 618 452**

• **BAOGUO YANG ET AL: "Burst frame synchronization for OFDM transmission in multipath fading links" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 1, 19 September 1999 (1999-09-19), pages 300-304, XP010352880 ISBN: 978-0-7803-5435-7**
• **KIM J ET AL: "SYNCHTRONIZATION AND CHANNEL ESTIMATION IN CYCLIC POSTFIX BASED OFDM SYSTEM" IEICE TRANSACTIONS ON COMMUNICATIONS, COMMUNICATIONS SOCIETY, TOKYO, JP, vol. E90B, no. 3, 1 March 2007 (2007-03-01), pages 485-490, XP001541866 ISSN: 0916-8516**
• **THOMAS KELLER ET AL: "Orthogonal Frequency Division Multiplex Synchronization Techniques for Frequency-Selective Fading Channels" IEEE JOURNAL ON SELECTED AREAS IN COMMUNICATIONS, IEEE SERVICE CENTER, PISCATAWAY, US, vol. 19, no. 6, 1 June 2001 (2001-06-01), XP011055390 ISSN: 0733-8716**

**Description**

**FIELD OF THE INVENTION**

This invention relates to a method and apparatus for improving the "discovery" of a received signal. By "discovery" we mean determining the presence of, and information about, such a signal.

**BACKGROUND OF THE INVENTION**

The COFDM (coded orthogonal frequency-division multiplex) technique can be used for the transmission of any digital information, and is well known to the skilled person. In brief, in COFDM, data is divided between a large number of (typically more than a thousand) closely-spaced carriers. This explains the 'Frequency Division Multiplex' part of the name COFDM. Only a small amount of the data is carried on each carrier, and this significantly reduces the influence of intersymbol interference.

The distribution of the data over the many carriers means that selective fading will cause some bits to be received in error while others are received correctly. By using an error-correcting code, which adds extra data bits at the transmitter, it is possible to correct many or all of the bits which were incorrectly received. The information carried by one of the degraded carriers is corrected because other information, which is related to it by the error correction code, is transmitted in a different part of the multiplex (and, it is hoped, would not suffer the same deep fade). This explains the 'Coded' part of the name COFDM.

The 'Orthogonal' part of the COFDM name indicates that there is a precise mathematical relationship between the frequencies of the carriers in the system. The receiver acts as a bank of demodulators, translating each carrier down to dc, the resulting signal then being integrated over a symbol period to recover the raw data. If the other carriers all beat down to frequencies which, in the time domain, have a whole number of cycles in the symbol period (t), then the integration process results in zero contribution from all these other carriers. Thus, the carriers are linearly independent (i.e. orthogonal) if the carrier spacing is a multiple of 1/t.

The process of creating an OFDM signal may be summarised by the following steps.

A serial digital signal comprising a bit stream is converted into a plurality of parallel bit streams. Using a chosen modulation scheme, such as Binary Phase-Shift Keying (BPSK) or Quadrature Amplitude Modulation (QAM) the parallel bit streams are mapped to a plurality of subcarriers. BPSK modulates one bit per carrier, in 4-QAM there 4 are carrier states of equal magnitude each separated by 90 degrees and so this modulation scheme can carry 2 bits on each carrier. With higher order levels of QAM more bits per carrier may be modulated.

The plurality of modulated carriers are chosen to have a frequency spacing that is the inverse of the active symbol period over which the receiver will examine the signal. It is the choice of carrier spacing in relation to the active symbol period that ensures the orthogonality of the carriers. At the receiver the demodulator for one carrier does not "see" the modulation of others.

The original input bit streams which are now mapped onto carriers can be thought Of as frequency coefficients. Performing a Fourier transform on frequency coefficients transforms a frequency domain signal to a time domain signal (a signal varying in amplitude with time). Accordingly, the bit stream data representing the modulation onto groups of modulated carriers is fed to an inverse Fast Fourier Transform (IFFT) block which transforms the data into a time domain modulated signal comprising symbols, with groups of symbols arranged Into frames with appropriate guard intervals between the symbols. Each symbol results from one set of modulated sub-carriers.

The "frequency" of symbols within an OFDM signal is typically described as that of either the lowest carrier or the centre carrier in the set of carriers used. In reality, of course, the OFDM signal is a signal varying in amplitude with time that is formed from the plurality of carriers, as described above. It is useful, though, to describe the "frequency" of a symbol in this way, particularly in the context of DVB signals described next.

An example of the use of guard intervals in OFDM transmission may be found In "Burst frame synchronization for OFDM transmission In multipath fading links" Baoguo Yang et al, VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA, IEEE, US, vol. 1, 19 September 1999 (1999-09-19), pages 300-304.

The invention is described in the context of the reception of so-called DVB-T signals, that is signals in accordance with the Digital Video Broadcasting standard for Terrestrial television, as defined In European Telecommunication Standard ETS 300 744, and in the context of a second generation of such signals referred to generally as DVB-T2. Information regarding the proposed DVB-T2 signals may be found in "DVB-T2 Call for Technologies" publicly available from the Digital Video Broadcasting consortium as document SB 1644r1. The invention is not, however, limited to use with such signals, but can be used with other many-carrier transmission systems using OFDM (orthogonal frequency division multiplexing), FDM (frequency division multiplexing), or to signals used more widely in broadcasting, and beyond that in telecommunications generally, e.g. mobile telephony, wireless networking or power-line communications.

Digital television systems are used in frequency bands that are planned. These bands are divided into radio-frequency (RF) channels; in the case of the UHF band used in Europe for television broadcasting, for example, these channels are nominally 8 MHz wide. This planning structure originated in the days of analogue television, and at the time of writing analogue transmissions (to standards that may vary from country to country) and digital transmissions to the DVB-T standard may both be found sharing the spectrum (albeit of course not in the same channels in the same area). Thus it could be said that, at some location, analogue service A occupies RF channel m while digital service B occupies RF channel n, and so on.

The art of spectrum planning lies in assigning the RF channels to the services in different areas in such a way as to avoid excessive interference between services while maximising their number. In practice a further tool is used in addition: sometimes transmissions are deliberately offset in frequency (by a small amount, a fraction of a channel width) in order to obtain some additional protection in particularly difficult mutual-interference scenarios. These offsets can take various values up to a maximum of the order of 0.5 MHz. Now consider the problem faced when a receiver is first installed at a location. It does not 'know' what RF channels are in use locally, nor the service types and names. The likely number of services is nowadays too great to require manual intervention by the user, so the receiver must discover this information for itself. It does this by 'scanning' the band, trying each RF channel in turn to see what, if anything, is there. On finding a signal it then extracts whatever information is available and stores it for later presentation to the viewer in some human-friendly form.

If an analogue channel is found then the service name (e.g. "BBC 1") can be extracted from a teletext signal (if one is present). If a DVB-T multiplex signal is found, then information about the several services it carries can similarly be extracted and stored. This sounds very simple, but can in practice be irritatingly slow for the viewer who is waiting for the new receiver to start working. This is not perhaps an important problem, when needed just once for a newly-purchased receiver installed in a fixed location. However, the scan isn't in practice just a one-off. With the large number of services squeezed in to the multiplexes available in one location it is not an infrequent occurrence that some rearrangement of services takes place, necessitating a re-scan. Furthermore, with the growth in the use of more portable televisions, and devices other than television sets being used for TV reception (e.g. laptop computers), it has to be done whenever the location changes as well.

The process is more long-winded than desirable, partly because of the design of the DVB-T signal. It contains a number of options that broadcasters/multiplex operators can choose in order to optimise performance for the particular coverage scenario, including some (two FFT sizes, 2K and 8K, together with a range of guard-interval fractions) which can only be found by trial and error, since until they are correct nothing else can be decoded. The receiver has to try this on every RF channel, and for every possible offset from the nominal frequency that may be applied.

The process of trying all the DVB-T options in the receiver can be sped up considerably by a degree of parallelism, as described in our Published Patent Application EP-A-1 406 402, but this is only feasible when the number of possible combinations is small. It is likely that the development of DVB-T2 will introduce further broadcaster options (e.g. more Fast Fourier Transform FFT sizes), and that receivers will be faced in the future with scanning a band (or bands) that contain analogue TV, DVB-T and DVB-T2 signals. A receiver will therefore have to test for the presence of any of these three in every RF channel. Clearly scan times will become still longer, and the only way to avoid this becoming excessive is to ensure that at least the test whether a channel contains DVB-T2 can be made quickly, despite its many options.

We have appreciated the need to improve broadcast signals, such as DVB-T2, to contain some signal feature devoted to signal discovery, something unique to DVB-T2 whilst minimising any negative effects from introducing such a signal feature. If this could be made to operate quickly (more quickly than is possible for DVB-T) then introducing DVB-T2 will not have so serious an impact on the total scan time. However, it is also important that adding this feature does not significantly reduce the data capacity of DVB-T2, one of whose goals is to provide greater capacity than DVB-T. If the signal feature could perform other tasks as well as signal discovery, without performance compromise, that would assist in this goal.

SUMMARY OF THE INVENTION

The invention in its various aspects is defined in the independent claims below, to which reference should now be made. Advantageous features are set forth in the appendant claims.

A preferred embodiment of the invention is described below with reference to the drawings. The preferred embodiment takes the form of a DVB transmitter, receiver and system arranged to use a modified DVB signal containing a symbol that has characteristics potentially different from the surrounding data symbols. We will refer to this symbol as a "Unique Signal-Discovery Symbol" (USDS). The unique signal-discovery symbol can serve several purposes: (i) it identifies the signal as being of DVB-T2 format (referred to herein as "signal discovery"); (ii) it enables coarse frequency offset to be determined (iii) it serves to indicate the start of a frame.

In OFDM, each data symbol has its own "guard interval" (wherein the signal waveform at the end of the symbol is a repeat of the waveform at the start of the same symbol). In practice, it is convenient to think of the transmitted symbol in two parts: the guard interval and the following active symbol, which is so called because, in a correctly aligned receiver, the FFT window is in that time slot. Using the guard interval, the initial timing accuracy only needs to ensure that the samples are taken from one symbol. Similarly, the unique signal-discovery symbol of the preferred embodiment has such a guard interval, but with a small but significant change, namely applying a frequency shift to the second "guard interval" part of the unique signal-discovery symbol.

In a receiver arranged to receive an OFDM signal with such a USDS, a complementary frequency shift is needed in the Guard Interval Correlation (GIC) process. The frequency shift must be chosen appropriately to tie in with features of both the signal and the reception process. The choice of frequency shift is described in detail later.

The use of the frequency shift in the second part of the USDS and complementary frequency shift in the correlation process at a receiver avoids various problems such as: (i) the presence of significant CW interferers; (ii) certain pathological but practically-occurring examples of propagation channels; and (iii) distinguishing the USDS symbol, for those cases where the USDS symbol and the main data symbols use the same FFT size.

To retain the ability to measure fine frequency offset in the first step of signal discovery, the preferred embodiment extends the benefit of the USDS by using a 3-part version of the USDS.

BRIEF DESCRIPTION OF THE FIGURES

An embodiment of the invention will now be described by way of example only and with reference to the figures, in which:

Figure 1:    is a schematic block diagram of a known DVB transmitter that may embody the present invention;
Figure 2:    is a schematic block diagram of a known DVB receiver that may embody the present invention;
Figure 3:    is a representation of an OFDM signal with a unique signal-discovery symbol (USDS);
Figure 4:    is a schematic block diagram of components or a receiver suitable for receiving the signal of Figure 3;
Figure 5:    is a representation of an OFDM signal with a unique signal-discovery symbol (USDS) according to a first embodiment of the invention;
Figure 6:    is a schematic block diagram of components or a receiver suitable for receiving the signal of Figure 5;
Figure 7:    is a representation of an OFDM signal with a unique signal-discovery symbol (USDS) according to a second embodiment of the invention;
Figure 8:    is a schematic block diagram of components or a receiver suitable for receiving the signal of Figure 7;
Figure 9:    shows the effect of dangerous delays; and
Figure 10:    is a block diagram of an alternative receiver arrangement.

DESCRIPTION OF A PREFERRED EMBODIMENT

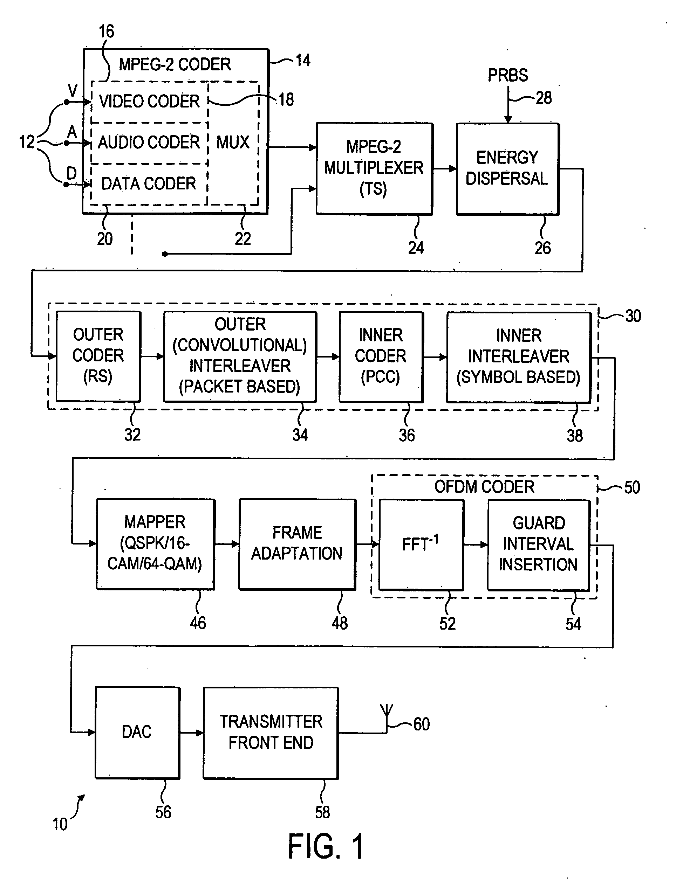

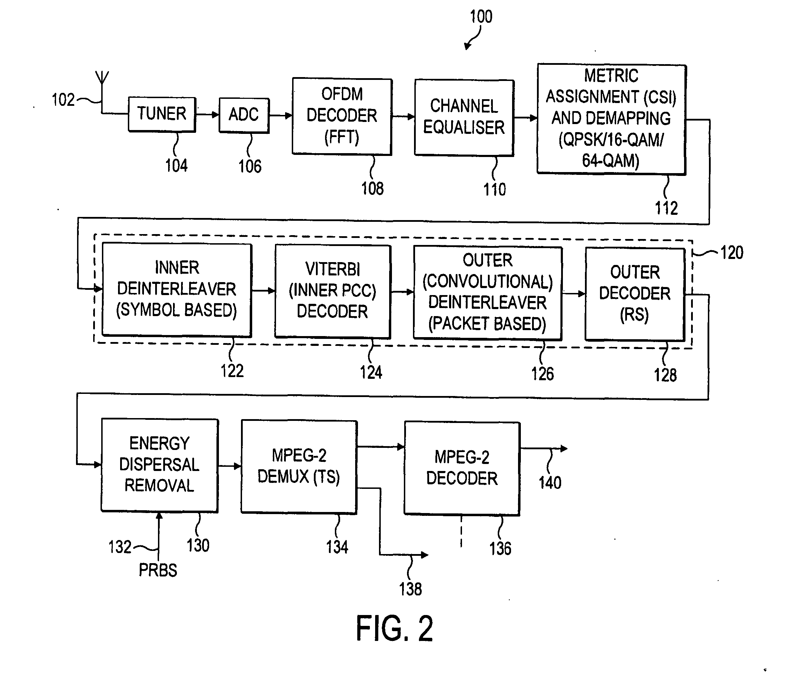

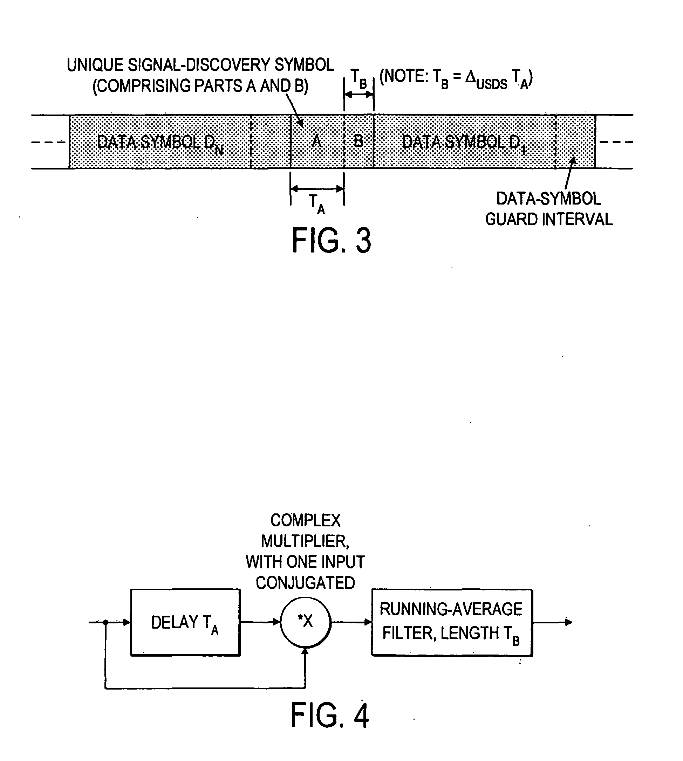

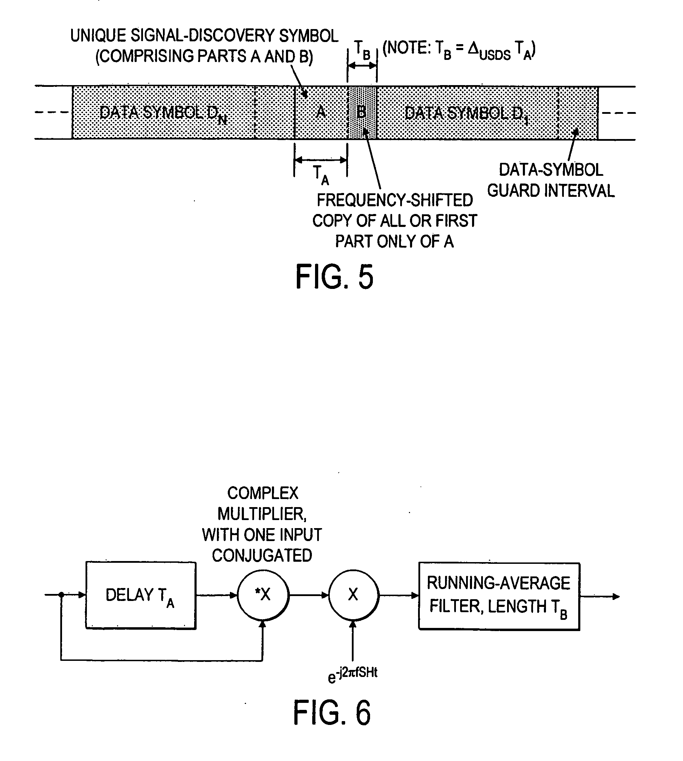

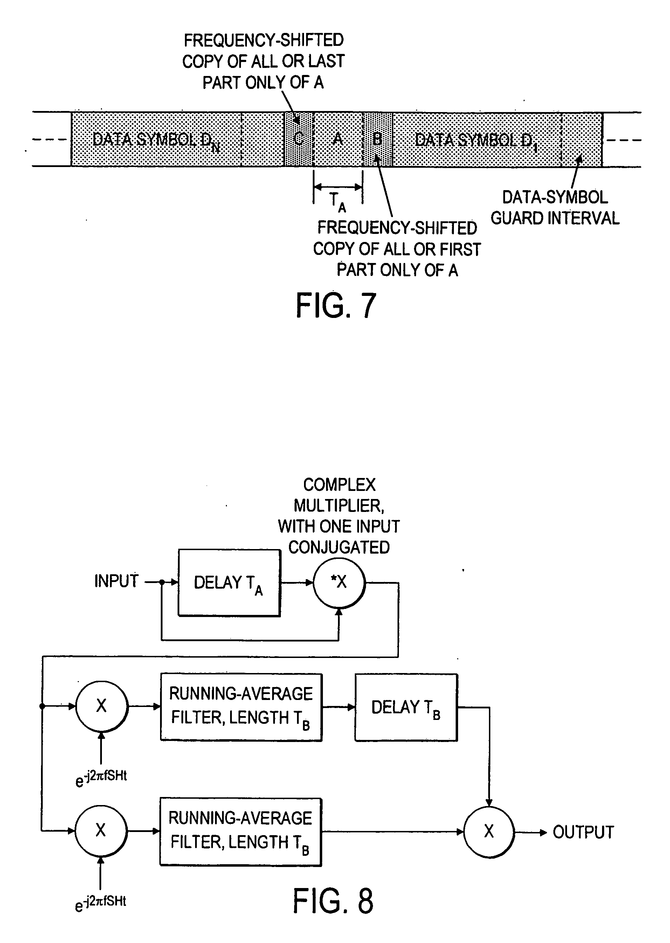

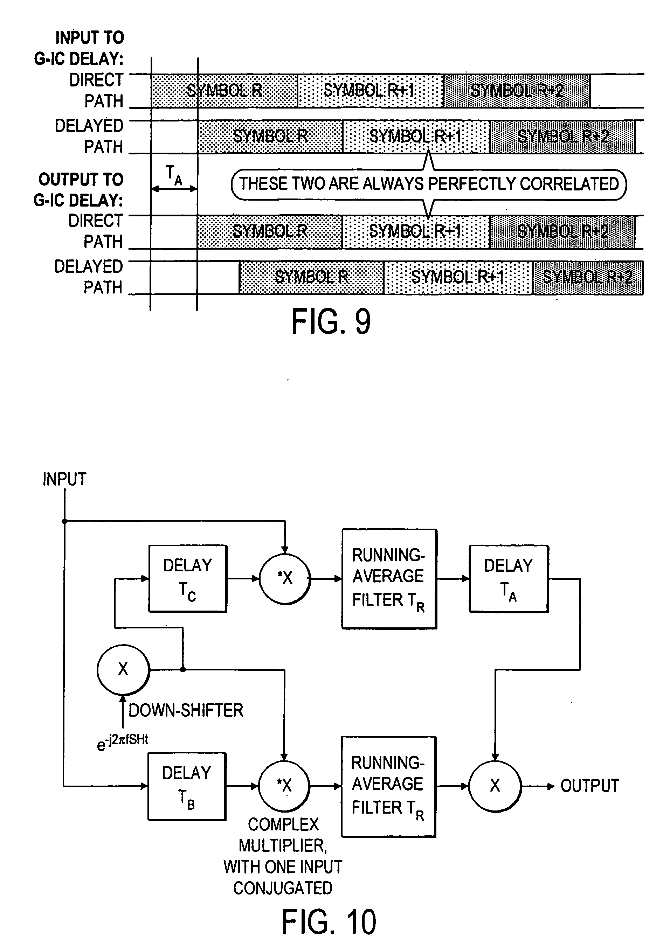

The preferred embodiment is implemented as a DVB transmitter, receiver and system. To enable an understanding of the present invention a description of the principles of a DVB-T transmitter and receiver are first described with reference to Figures 1 and 2. The general structure of a USDS symbol is described along with the functional components for receiving such signals containing such symbols with reference to Figures 3 and 4. Then, a first embodiment of the invention having a USDS symbol and components for receiving such signals are described with reference to Figures 5 and 6. A second preferred embodiment of the USDS symbol and components for receiving such signals are described with reference to Figures 7 and 8. Figure 9 shows the effect of so called dangerous delays and how the embodiment makes improvements in this regard. Finally, Figure 10 shows a further possible receiver arrangement. To avoid repetition, parts of the transmitter and receiver which are described with reference to Figures 1 and 2 are not again described in detail in relation to the subsequent figures, but for the avoidance of doubt the invention may be embodied in a transmitter and receiver of the type shown in Figures 1 and 2.

DVB-T Transmitter

Figure 1 is a block diagram of a transmitter 10 for use in the Digital Video Broadcasting standard for Terrestrial television (DVB-T) as defined in European Telecommunication Standard ETS 300 744 (hereinafter "the standard"). Reference should be made to that standard for further details; the following description is by way of a summary for the purpose of illustrating the present invention.

The transmitter receives video (V), audio (A), and data (D) signals from appropriate signal sources via inputs 12 and these are applied to an MPEG-2 coder 14. The MPEG-2 coder includes a separate video coder 16, audio coder 18 and data coder 20, which provide packetised elementary streams which are multiplexed in a programme multiplexer 22. Signals are obtained in this way for different programmes, that is to say broadcast channels, and these are multiplexed into a transport stream in a transport stream multiplexer 24. Although considered as part of the transmitter for the purposes of this specification, the components up to the multiplexer 24 will normally be located at the studio complex. The output of the transport stream multiplexer 24 consists of packets of 188 bytes and is applied to a randomiser 26 for energy dispersal, where the signal is combined with the output of a pseudo-random binary sequence (PRBS) generator received at a terminal 28. The randomiser more evenly distributes the energy within the RF (radio frequency) channel. The MPEG-2 coding and multiplexing and the randomising are not further described as they are not relevant to an understanding of the present invention.

The signal is now applied to a channel coding section 30 which is generally known as the forward error corrector (FEC) and which comprises four main components, namely: an outer coder 32, an outer interleaver 34, an inner coder 36, and an inner interleaver 38.

These will now be described. The two coding stages 32,36 provide a degree of redundancy to enable error correction at the receiver. The two interleaving stages 34,38 are necessary precursors for corresponding deinterleavers at a receiver so as to break up bursts of errors so as to allow the error correction to be more effective.

The outer coder 32 is a Reed-Solomon (RS) coder, which processes the signal in packets of 188 bytes and adds to each packet 16 error protection bytes. This allows the correction of up to 8 random erroneous bytes in a received word of 204 bytes. This is known as a (204, 188, t=8) Reed-Solomon code. This is achieved as a shortened code using an RS (255, 239, t=8) encoder but with the first 51 bytes being set to zero.

The outer interleaver 34 effects a Fomey convolutional interleaving operation on a byte-wise basis within the packet structure, and spreads burst errors introduced by the transmission channel over a longer time so they are less likely to exceed the capacity of the RS coding. After the interleaver, the nth byte of a packet remains in the nth byte position, but it will usually be in a different packet. The bytes are spread successively over 12 packets, so the first byte of an input packet goes into the first output packet, the second byte of the input packet is transmitted in the second output packet, and so on up to the twelfth. The next byte goes into the first packet again, and every twelfth byte after that. As a packet contains 204 bytes, and 204 = 12 x 17, after the outer interleaving a packet contains 17 bytes that come from the same original packet.

The inner coder 36 is a punctured convolutional coder (PCC). The system allows for a range of punctured convolutional codes, based on a mother convolutional code of rate 1/2 with 64 states.

The inner interleaver 38 in accordance with the standard is implemented as a two-stage process, namely bit-wise interleaving followed by symbol interleaving. Both are block based. First, however, the incoming bit stream is divided into 2, 4 or 6 sub-streams, depending on whether QPSK (quadrature phase shift keying), 16-QAM (quadrature amplitude modulation), or 64-QAM is to be used, as described below. Each sub-stream is separately bit interleaved and all the streams are then symbol interleaved.

The bit interleaver uses a bit interleaving block size which corresponds to one-twelfth of an OFDM symbol of useful data in the 2k mode and 1/48 of an OFDM symbol in the 8k mode. These two modes are explained below.

The symbol interleaver maps the 2, 4 or 6-bit words onto 1512 or 6048 active carriers, depending on whether the 2k or 8k mode is in use. The symbol interleaver acts so as to shuffle groups of 2, 4 or 6 bits around within the symbol. This it does by writing the symbol into memory and reading out the groups of 2, 4 or 6 bits in a different and permuted order compared with the order in which they were written into the memory.

Finally the groups of 2, 4 or 6 bits are applied to a mapper 46 which quadrature modulates the bits according to QPSK, 16-QAM or 64-QAM modulation, depending on the mode in use. (QPSK may also be represented as 4-QAM.) The constellations are shown in Figure 9 of the standard. It will be appreciated that this requires 1, 2 or 3 bits on the X axis and 1, 2 or 3 bits on the Y axis. Thus while reference has been made to 2, 4 or 6 bits in the shuffling process, in fact the shuffling is applied to 1, 2 or 3 bits in the real part and 1, 2 or 3 bits in the imaginary part.

The signal is now organized into frames in a frame adapter 48 and applied to an OFDM (orthogonal frequency-division multiplexer) coder 50. Each frame consists of 68 OFDM symbols. Each symbol is constituted by 1705 carriers in 2k mode or 6817 carriers in 8k mode. Using the 2k mode as an example, instead of transmitting 1705 bits sequentially on a single carrier, they are assembled and transmitted simultaneously on 1705 carriers. This means that each bit can be transmitted for much longer, which, together with the use of a guard interval, avoids the effect of multipath interference and, at least in 8k mode, allows the creation of a single-frequency network.

The duration of each symbol, the symbol period, is made up of an active or useful symbol period, and the guard interval. The spacing between adjacent carriers is the reciprocal of the active symbol period, thus satisfying the condition for orthogonality between the carriers. The guard interval is a predefined fraction of the active symbol period, and contains a cyclic continuation of the active symbol.

The predefined fractions are 1/4, 1/8, 1/16 and 1/32. The total symbol duration is of the order of 250 microsecond for the 2k mode and 1 ms for the 8k mode.

The OFDM coder 50 consists essentially of an inverse fast Fourier transform (FFT) circuit 52, and a guard interval inserter circuit 54. The construction of the OFDM coder will be known to those skilled in the art.

Reference is made to British Broadcasting Corporation Research and Development Report BBC RD 1996/8, P. Shelswell, "The COFDM Modulation System" with regard to OFDM generally, and to a paper by Stott, J.H., 1997, "Explaining some of the Magic of COFDM", Proceedings of the 20th International Symposium, Montreux 1997, pages 341 to 350, which describes how the various components of the forward error corrector co-operate with the OFDM coder to provide a very advantageous coding system.

Finally, the signal is applied to a digital to analogue converter 56 and thence to a transmitter 'front end' 58, including the transmitter power amplifier, and is radiated at radio frequency from an antenna 60.

DVB-T Receiver

The receiver construction includes components corresponding to those in the transmitter but in reverse order. A generalised DVB-T receiver 100 is illustrated in simplified form in the block diagram of Figure 2, with some elements which are not of particular relevance to the present invention omitted.

In the receiver 100 an analogue RF signal is received by an antenna 102 and applied to a tuner or down-converter 104, constituting the receiver front end, where it is reduced to baseband. The signal from the tuner is applied to an analogue-to-digital converter 106, the output of which forms the input to an OFDM decoder 108. The main constituent of the OFDM decoder is a fast Fourier transform (FFT) circuit, to which the FFT in the transmitter is the inverse. The FFT receives the many-carrier transmitted signal with one bit per symbol period on each carrier and converts this back into a single signal with many bits per symbol period. The existence of the guard interval, coupled with the relatively low symbol rate compared with the total bit rate being transmitted, renders the decoder highly resistant to multipath distortion or interference.

Appropriate synchronisation is provided, as is well-known to those skilled in the art. In particular, a synchronising circuit will receive inputs from the ADC 106 and the FFT 108, and will provide outputs to the FFT and, for automatic frequency control, to the tuner 104.

The output of the OFDM decoder 108 is then applied to a channel equalizer 110. This estimates the channel frequency response, then divides the input signal by the estimated response, to output an equalised constellation.

Now the signal is applied to a circuit 112 which combines the functions of measurement of channel state, and demodulation or demapping of the quadrature modulated constellations. The demodulation converts the signal back from QPSK, 16-QAM, or 64-QAM to a simple data stream, by selecting the nominal constellation points which are nearest to the actual constellation points received; these may have suffered some distortion in the transmission channel. At the same time the circuit 112 estimates the likelihood or level of certainty that the decoded constellation points do in fact represent the points they have been interpreted as. As a result a likelihood or confidence value is assigned to each of the decoded bits.

The output of the metric assignment and demapping circuit 112 is now applied to an error corrector block 120 which makes use of the redundancy which was introduced in the forward error corrector 30 in the transmitter. The error corrector block 120 comprises: an inner deinterleaver 122, an inner decoder 124, in the form of a soft-decision Viterbi decoder, an outer deinterleaver 126, and an outer decoder 128.

The inner deinterleaver 122 provides symbol-based deinterleaving which simply reverses that which was introduced in the inner interleaver 38 in the transmitter. This tends to spread bursts of errors so that they are better corrected by the Viterbi decoder 124. The inner deinterleaver first shuffles the groups of 2, 4 or 6 real and imaginary bits within a symbol (that is, 1, 2 or 3 of each), and then provides bit-wise deinterleaving on a block-based basis. The bit deinterleaving is applied separately to the 2, 4 or 6 sub-streams.

Now the signal is applied to the Viterbi decoder 124. The Viterbi decoder acts as a decoder for the coding introduced by the punctured convolutional coder 36 at the transmitter. The puncturing (when used) has caused the elimination of certain of the transmitted bits, and these are replaced by codes indicating a mid-value between zero and one at the input to the Viterbi decoder. This will be done by giving the bit a minimum likelihood value. If there is no minimum likelihood code exactly between zero and one, then the added bits are alternately given the minimum values for zero and for one. The Viterbi decoder makes use of the soft-decision inputs, that is inputs which represent a likelihood of a zero or of a one, and uses them together with historical information to determine whether the input to the convolutional encoder is more likely to have been a zero or a one.

The signal from the Viterbi decoder is now applied to the outer deinterleaver 126 which is a convolutional deinterleaver operating byte-wise within each packet. The deinterleaver 126 reverses the operation of the outer interleaver 34 at the transmitter. Again this serves to spread any burst errors so that the outer coder 128 can better cope with them.

The outer decoder 128 is a Reed-Solomon decoder, itself well-known, which generates 188-byte packets from the 204-byte packets received. Up to eight random errors per packet can be corrected.

From the Reed-Solomon outer decoder 128 which forms the final element of the error corrector block 120, the signal is applied to an energy dispersal removal stage 130. This receives a pseudo-random binary sequence at an input 132 and uses this to reverse the action of the energy dispersal randomiser 26 at the transmitter. From here the signal passes to an MPEG-2 transport stream demultiplexer 134. A given programme is applied to an MPEG-2 decoder 136; other programmes are separated out as at 138. The MPEG-2 decoder 136 separately decodes the video, audio and data to provide elementary streams at an output 140 corresponding to those at the inputs 12 on Figure 1.

Unique Signal-Discovery Symbol

The general principle of a unique signal-discovery symbol for use with the DVB transmitter and receiver arrangement described above will now be described with reference to Figures 3 and 4.

The arrangement now described inserts a single OFDM symbol, including its conventional-for-OFDM guard interval extension, that has characteristics potentially different from the surrounding data symbols. As previously noted, we will refer to such a symbol herein as a "unique signal-discovery symbol" (USDS).

The USDS is inserted at regular intervals, and could be considered to act as marking the start of a frame. Let us suppose it is based on a single, fixed FFT-size $N_{USDS}$ whereas the data symbols have FFT-size $N_D$ and guard interval fraction $\Delta_D$ which each take one of several possible values depending on the particular mode currently chosen by the broadcaster. By keeping the USDS in a single format, while the data symbols may change, the receiver has only to search for that single USDS format (unlike the plurality of searches that a DVB-T receiver previously had to perform either sequentially or in parallel).

This is illustrated in Figure 3, which shows how the USDS is inserted between the last data symbol of one frame, and the first data symbol of the next. Purely for reasons of illustration that may become clearer later in the document, the guard interval of the variously-sized OFDM symbols is shown at the end of the symbol (whereas it is more conventional to consider it to be the first part of the OFDM symbol, matching its alternative name cyclic prefix). The distinction is somewhat arbitrary: the key point is that with either interpretation, the first and last parts (each of guard-interval length) of the symbol are identical as transmitted. The USDS is taken to mark the start of a frame, so that the immediately-following data symbol $D_1$ is the first of that frame, while the immediately-previous symbol is the last data symbol of the previous frame. Each data symbol has its own ODFM guard interval (wherein the signal waveform at the end of the symbol is a repeat of the waveform at the start of the same symbol). The USDS itself can be considered to have two parts, A and B in which B is the guard interval to A, and thus is a repeat of the signal in A.

The signal transmitted in part B of the USDS is the same as is transmitted in part A, starting from the beginning. If $\Delta_{USDS}$ is less than one, then B is the same as the corresponding first part of A; if $\Delta_{USDS}$ equals one, then B is exactly the same as A in its entirety; and if $\Delta_{USDS}$ is greater than one, then B consists of as many complete repetition(s) and a part repetition of A as are needed.

The key purpose of the first receiver processing step is signal discovery, that is simply to detect, as quickly as possible, something about the signal which indicates it is likely (or not) that the RF channel being examined contains such a signal. This needs to be possible despite the presence of an unknown frequency offset, comprising the combination of any deliberate offset at the transmitter together with the receiver tuning error. This is achieved with the USDS just described by applying the well-known guard-interval correlation (G-IC) technique that is commonly used in order to obtain initial time synchronisation when receiving an OFDM signal. The presence of the guard interval means that there is strong correlation between points in the symbol that are separated by the FFT length, namely $T_A$ in the case of the USDS symbol in Figure 3. At the transmitter, the signal is precisely identical at points within the USDS separated by $T_A$. At the receiver, the signal at the two points will also be the same except that the existence of a frequency offset will cause the second to differ from the first by a rotation in the complex plane.

This is the clue to the detection method, which is illustrated in Figure 4. The received signal is passed through a delay of length equal to $T_A$ and then the input and output of the delay are multiplied together (having taken the complex conjugate of one of them first). It's an arbitrary choice which is conjugated; it only makes a very minor difference to the result (it reverses the sign of the rotation observed for a particular frequency offset). The output of the multiplication is then filtered to reduce the degree of noisiness. It is common to choose a running-average filter (sometimes known as a 'top hat' filter from the shape of its impulse response) whose length may sensibly be chosen to match the guard-interval length, i.e. $T_B$ in our example. The output of the filter contains a pulse whose magnitude is essentially triangular (of total length along its base of $2 T_B$) corresponding to the presence of the USDS. The argument of this pulse is related to the frequency offset.

The argument increases linearly with frequency offset, executing a complete cycle of rotation ($2\pi$ radians) when the offset increases by an amount equal to the carrier spacing of the OFDM symbol in question. It follows that the argument can form the basis of a way to determine the fine component of frequency error (the fraction of a carrier spacing) but that coarse frequency offset ("how many carriers?") must be determined another way.

Elsewhere (and to a degree also added on the slopes of the pulse) there is a complex noise-like signal. This results partly from receiver noise but mostly from random correlations between parts of the (somewhat noise-like) OFDM signal that are not directly related, i.e. between parts of one symbol and another, but also between two parts of the same data symbol, when the data symbols have a different FFT length from the USDS.

Before filtering, the multiplier output has a magnitude (during the $T_B$-long period when corresponding samples from A and B are present at its input) which equals the original signal's power envelope. For a general OFDM symbol carrying random data, this would be noiselike, but with an underlying mean corresponding to a rectangular pulse. In our case of the USDS, the envelope is defined by our choice of the signal in A.

If the USDS and data symbols have the same FFT size, the G-IC process produces a pulse for every OFDM symbol, USDS or data, whose length depends on the respective guard interval. If, say, the length of the data-symbol guard interval is greater than the length of the USDS guard interval, and thus also longer than the running-average filter, then the pulses corresponding to data symbols will have a flat top. (The length of the running-average filter determines the length of the sloping sides).

As shown in Figure 4, the received complex-baseband signal is fed in at the left, and the output on the right is a complex signal whose magnitude contains a triangular pulse corresponding to every USDS symbol. The choice of which input to the complex multiplier is conjugated is arbitrary, for the purpose of generating a pulse. Since the guard-interval correlator of Figure 4 generates a (complex) pulse whose magnitude is triangular, it can be used to detect the presence of the USDS irrespective of frequency offset. Thus the functions of (a) detecting the presence of signal that contains a USDS, and (b) detecting the start of a frame are both performed by this relatively simple circuit.

We have not said very much about the nature of the OFDM signal that is transmitted to function as the USDS. For the purposes of signal discovery we have just described so far it does not really matter very much what complex amplitudes are sent on the OFDM carriers. Obviously it does matter for other purposes, which we need not consider in too great a detail here.

The receiver needs to determine the coarse frequency offset, which we suppose initially to be arbitrary in the range $-f_{ERRMAX}$ to $+ f_{ERRMAX}$. To this end, the number of carriers used in the USDS symbol is reduced (compared with the data symbols) such that roughly $f_{ERRMAX}$ is trimmed from each edge of the spectrum. This guarantees that all USDS-symbol carriers will lie within the receiver passband, despite the initial frequency offset. Having located the USDS by the G-IC process, the receiver then performs an approximate demodulation of the USDS OFDM symbol, using an FFT in the usual way. The locations of received carriers (as detected by the FFT) can then be compared with those expected, and thus the frequency offset estimated.

The presence of multipath (which may well have a duration that exceeds TA, for those modes where a long FFT is used for the data symbols) there will be substantial crosstalk from the immediately-previous data symbol onto the USDS and so it will only be possible to convey a very small number of bits using the USDS. In effect the small number of possible frequency-domain sequences serve as the code words of a highly redundant coding and modulation system.

The 'strictly limited information' that can be conveyed is used to indicate which of a small number of possible FFT sizes is used for the data symbols that, together with the USDS symbol, comprise the signal frame.

The process at a receiver can be summarized as:

- look for the USDS using the G-IC method of Figure 4
- if not found, there is no signal of the desired type (e.g. DVB-T2) on this RF channel
- if found, note it marks the start of a frame, and that the position of the USDS is now known
- demodulate the USDS, using an FFT of size $N_{USDS}$
- correlate USDS carrier magnitudes with those expected, to estimate the coarse frequency offset
- demodulate the USDS in more detail to obtain the signalling which indicates the data-symbol FFT size ND
- use the G-IC method of Figure 4, but adapted to the needs of the indicated data-symbol FFT size $N_D$
- the data guard interval can be determined from the period between the resulting G-IC pulses
- start to demodulate the main data symbols

Although the USDS has been described as a conventional guard-interval OFDM symbol (albeit of particular parameters) it will be appreciated that it could be replaced by any convenient time domain sequence to which a guard-interval-like (partial) repetition was appended. Of course it would be necessary for this sequence to be of an appropriately band-limited form to match the bandwidth occupied by the OFDM symbols, whose spectrum is naturally defined in substantial degree once the number of active carriers is set. Such a sequence, defined in the time domain, could be transformed using an FFT of size equal to the length of the sequence (excluding the G-I extension) into the frequency domain. The frequency-domain coefficients would then give an alternative, OFDM-style definition of exactly the same sequence. The two approaches are in fact completely equivalent. The key feature is the addition of the guard interval permitting location of the pulse using the guard-interval correlation approach.

An alternative time-domain approach inserts a known time-domain sequence. The receiver then correlates the received signal with a stored version of this known sequence, whereupon there will be a correlation peak when the inserted sequence is found. The 'sharpness' of this peak depends on the auto-correlation function of the inserted sequence; it will be fundamentally limited because of the (obligatory) band-limiting. The drawback of this method is that detecting a clear correlation peak will no longer happen once the signal as received is offset in frequency by virtue of the combined effects of receiver tuning error and any intentional transmitter-frequency offset. The exact form of the deterioration will depend on the sequence chosen. The arrangement just described, based on the use of guard-interval correlation, has some limitations, all of which the new embodiment of the invention will address. One limitation arises if the range of data-symbol FFT sizes $N_D$ includes the same size $N_{USDS}$ that is used for the signal-discovery symbol. When $N_D$ equals $N_{USDS}$, then the guard-interval correlator will give an output pulse for every symbol, data or signal-discovery. So in this case something more is needed in order to identify which of them corresponds to the USDS. This will take longer, although that is not perhaps quite as serious it appears, since at least it has been correctly recognised that a digital television signal is present. If it is DVB-T2, then we would want the receiver to spend the necessary time to demodulate enough data to extract the wanted service-name information. The untidiness is that the receiver cannot simply follow a single algorithm to achieve the desired result.

A more irritating problem is if $N_{USDS}$ corresponds to one of the FFT sizes used in DVB-T, because a response will then occur:

- for every symbol in the presence of DVB-T
- for every symbol in the case when DVB-T2 is present but $N_D$ equals $N_{USDS}$
- solely on the USDS in the case of other modes of DVB-T2.

The process is no longer so simple to unravel! What we'd like is a unique indication of DVB-T2.

A further fundamental problem with guard-interval correlation occurs when the received signal also contains a CW interferer, which will be described later.

A further drawback concerns certain 'dangerous' delay values when the propagation channel contains delayed path(s) in addition to the first - a practical example being the use of a Single-Frequency Network (SFN), something that the choice of COFDM makes possible. One simple example occurs when there is a propagation path, of any arbitrary significant amplitude, whose delay relative to the first equals $T_A$.

In this case, for all the data symbols (which we assume to be chosen to belong to a mode with longer symbols and a long guard interval, since otherwise we could not hope for data-signal demodulation to cope with such a long path delay) there will be perfect correlation between the direct-path component (at the output of the correlator delay element) and the delayed-path component (at the input to the correlator delay). The result is that the correlator output will contain a noisy-DC offset which will swamp the desired correlation pulse. This is shown in Figure 9.

A more specific special exception occurs when there are two paths, the second is the inverse of the first, and the relative delay equals $T_A$. The output G-IC pulse will now be reduced in size, depending on the length of the USDS guard interval. When the G-I is that same length $T_A$ (i.e the guard interval is 100%) there is no (wanted) output from the correlator at all! It is clear that these various 'dangerous' effects could possibly arise, albeit perhaps rarely, since as part of the desire for efficiency we would strive to keep $T_A$ relatively short, which means it could easily be less than the channel extent we aim to design for. E.g. DVB has a mode with 8K FFT and G-I fraction $\Delta_D$ equal to 1/4. This means that the system is designed to cope without error with a channel extent whose length is 2K samples. It follows that even the choice of 2K for the USDS FFT is already marginal, even before we consider that DVB-T2 is supposed to offer a modest extension of the possible channel extent over that catered for by DVB-T.

Unique Signal-Discovery Symbol With Frequency Shift

To overcome the various problems discussed above with the general case of a Unique Signal-Discovery Symbol, a significant alteration is made to the USDS as now shown and described in relation to the first embodiment of Figures 5 and 6. The significant alteration is that the second part of the USDS, B in Figure 5, is changed so that it is a frequency-shifted copy of at least the first part of the USDS A.

Let us suppose the frequency shift is $f_{SH}$, then B is simply A multiplied by $e^{j2\pi f_{SH}t}$. Clearly, the USDS no longer looks like a conventional OFDM symbol. The choice of $f_{SH}$ will be discussed in due course. Clearly the shift can be implemented as described mathematically, by multiplication of the time-domain signal used in A. However, if $f_{SH}$ can be chosen to be a whole number of USDS-symbol carrier spacings, then the implementation is even simpler.

Just as the waveform of A is formed from the desired frequency-domain coefficients using an FFT, B is made in the same way, using the very same frequency coefficients but shifted by the appropriate number of carrier locations.

We therefore have two alternative possible implementations for applying the frequency shift to the repeated part of the symbol. In the first implementation, the USDS symbol is produced in the same was as the data symbols by an IFFT block which receives the carrier coefficients that defines the USDS symbol. The digital representation of the resulting repeated part of the symbol of the USDS is then frequency shifted. The data symbols are not frequency shifted in this manner. Conceptually, this can be thought of as taking a stream of symbols (including data and USDS symbols) but multiplying the repeated part of the USDS symbols only by the frequency shift. In the second implementation, the frequency shift of the delayed part of the USDS symbol is achieved by storing the frequency coefficients of the USDS symbol and then shifting all the coefficients by a specified number of carriers prior to the IFFT block. The two implementations achieve the same result.

The frequency shifted portion could precede the non-frequency shifted portion in time or the frequency shifted portion could follow the non-frequency shifted portion in time. These two alternatives also achieve the same result.

The receiver processing is almost the same as previously described, but with one key difference. To explain this, consider what would happen if the receiver of Figure 4 were used unchanged. The output of the complex multiplier, during the period when corresponding parts of A and B are present at its inputs, is now multiplied by the complex tone used to shift B with respect to A. It will either be shifted up or down by $f_{SH}$, depending on which input of the multiplier has the complex conjugation applied. In the example shown in Figure 4, the conjugation is applied to the delayed input. The input to the delay will contain B at the time when A is emerging from the output of the delay. It follows that in this case, since A gets conjugated, the multiplier output will appear to have been shifted up by $f_{sh}$ i.e. multiplied by $e^{j2\pi fSHt}$. It follows in turn that simply by multiplying the multiplier output in turn by $e^{-j2\pi fSHt}$ we return the signal fed to the filter to what it was before the transmitted signal was changed. It follows that in conditions without interference or 'dangerous' delay values the new proposal and the prior art will produce exactly the same results, and will work as intended to produce an indication of the presence and location of the USDS.

One possible receiver processing arrangement is shown in Figure 6. The extra multiplier could equally be placed in front of the conjugate multiplier; depending on which of the two possible such locations is chosen it would then be necessary to multiply by either $e^{j2\pi fSHt}$ or $e^{-j2\pi fSHt}$ as appropriate. This is because the multiplication process is commutative and so the frequency shift may be applied before or after the conjugate multiplication.

Without the frequency shift described, the arrangement could suffer from false detections, if any part of the signal uses the same size FFT, $N_{USDS}$, that is used for the signal-discovery symbol. However, with the present embodiment the signal transmitted for the USDS is modified by the frequency shift applied to part B, while the data symbols are not. When a data symbol (having the same FFT size as the USDS) is input to the detector of Figure 6, the output of the first, conjugated multiplier will give an unshifted correlation, just as in non frequency shifted arrangement. However, this then encounters the frequency shift $-f_{SH}$ applied by the second multiplier, before being filtered. If we choose $f_{SH}$ and the length of the running-average filter to be related such that the latter contains a whole number of cycles of $f_{SH}$, then it follows that the unwanted false-detection pulse is cancelled out by the action of the running-average filter.

The running average filter is an important step in the process. To understand how the running average filter removes unwanted signals, consider the output of the delay, complex multiplier and frequency shift as a time modulated complex signal (with components on two axes). Any noise over the period of the time averaging will reduce to zero. Significantly, though, any waveform that performs one or more complete rotations in phase angle over the averaging period will also reduce towards zero (because over the averaging period there are equal and opposite contributions on each of the axes). This is precisely what happens to the data symbols (which are not frequency shifted at the transmitter) when the frequency shift is applied at the receiver. When a normal data symbol is received, the output of the delay, complex multiplier and frequency shift is a complex waveform which rotates in phase angle over the period corresponding to $f_{SH}$. Consequently, this reduces towards zero because over the period corresponding to $f_{SH}$ there are equal and opposite contributions in all phase directions. In contrast, though, the USDS symbol (which has a frequency shift for the repeated part at the transmitter) produces an output of the delay, complex multiplier and frequency shift that is a pulse-like waveform which does not rotate in phase angle over the period corresponding to $f_{SH}$ and so produces an output from the running average filter. As the input to the running average filter is approximately a square pulse, the output of the running average filter is a approximately a triangular peak.

For example, if we make $T_A = T_B$, so that the USDS has a 100% guard interval, and match the running-average filter to also have the length $T_B$, then we could choose $f_{SH}$ to be any whole integer number of carrier spacings of the symbol A. In effect, we have made the USDS truly unique in relation to the other symbols.

The embodiment of the invention avoids problems of CW interferers. These cause a complex-DC constant value to appear at the output of the first, conjugated multiplier. With the present embodiment this is then turned into a complex exponential $e^{-j2\pi fSHt}$ which is exactly averaged out by the running average filter, provided $f_{SH}$ and the length of the running-average filter are related, as already described above (to suppress false detections).

The embodiment also avoids problems with 'Dangerous delays'. The unwanted effects of these too are substantially cancelled out by the combined action of the shift and running-average filter in a similar way to the above two cases. The case illustrated in Figure 9 shows how the existence of a second path component delayed by $T_A$ with respect to the first causes correlated components to appear at the input and output of the 'guard-interval correlator', and thus causing an unwanted 'noisy-DC' output from the correlator. However, in our proposal this is multiplied by $e^{-j2\pi fSHt}$ and is then averaged out by the running-average filter (in the same way as described above, namely that the DC component becomes a signal that performs one or more complete rotations in phase angle over the period corresponding to $f_{SH}$ and so the running average filter will sum equal and opposite contributions from all phase angles over this period).

Many combinations of parameters could be chosen to exploit the technique presented here. The important requirement is that the length of the running-average filter must be an integer multiple of the period of the frequency shift imposed at the transmitter, i.e.

$$T_{FILTER} = integer/f_{SH}$$

It is usually preferable to match the filter to the length of the underlying correlation pulse, which in this case equals the length of the frequency-shifted 'guard-interval', so we have:

$$T_B = T_{FILTER} = integer/f_{SH}$$

Having settled that, we note that there is a degree of compromise implicit in inserting the USDS. We want it to be there reasonably frequently (so the receiver does not have to wait too long to find it) and we also want it to be detected reliably. Detection reliability improves with increasing length of B, since the running-average filter can then in effect filter any noise-like disturbances more aggressively, leaving a clearer detected pulse. However, we do not want to lose significant data capacity as result of transmitting the USDS, since once the receiver is locked the USDS is then essentially of no interest. So capacity constraints imply reducing the length and repetition rate of the USDS, whereas reliability and speed of acquisition of the signal imply the opposite.

In the present embodiment, an example when the modes specified for data symbols could include 1, 2, 4, 8, 16, and 32K FFTS, is to use 1K FFTs for the USDS with $T_A = T_B$, i.e. the 'guard interval' is 100%. This could be combined with a frequency shift which equals one carrier spacing in the symbol A, i.e. a 1K-OFDM carrier spacing.

The embodiment of the invention described has the following advantages:

- the USDS can be uniquely distinguished whatever FFT size is used for the data symbols, and will not be falsely detected when receiving a signal (such as DVB-T) which does not contain the USDS, even when the same FFT size is used
- the effect of CW interference (whereby a large DC offset may swamp the wanted correlation pulse) is cancelled out by ensuring that $T_{FILTER} = integer/f_{SH}$ and this is achieved with greater simplicity than would have been required if the shift was not applied
- the 'dangerous delays' described above no longer cause problems

We have appreciated, though, that with arrangement of the first embodiment, it is no longer possible to determine the fractional part of the wanted signal frequency offset by noting the argument of the (complex) output pulse. This is because the argument now includes a frequency offset between transmitter and receiver and a phase difference between the transmitter frequency shifter and receiver frequency shifter.

However, it should be noted that while this would be in principle be possible without the frequency shift of the guard interval, it is questionable whether much reliance should be placed on the measurement, especially in the presence of a CW interferer. Nevertheless, the technique can be extended to restore this facility, as now described in relation to the second embodiment.

Unique Signal-Discovery Symbol With Two Frequency Shift Components

To further improve the frequency shift Unique Signal-Discovery Symbol technique of the first embodiment, a further change may be made as now shown and described in relation to the second embodiment of Figures 7 and 8. The second embodiment regains the possibility to perform frequency measurement.

As explained above, the two-part USDS of the first embodiment, in which the second part, B, is frequency-shifted with respect to the first part, A, loses the ability to resolve the frequency offset of the incoming signal. Guard-interval correlation of an OFDM signal without frequency shift, can measure the 'fractional part' of the frequency offset by noting the argument of the complex correlation pulse (usually and beneficially after it has been smoothed by the running-average filter of Figure 4). This argument increases by $2\pi$ radians for every increase of frequency offset equal to the OFDM-symbol carrier spacing. Note that this carrier spacing is the reciprocal of $T_A$ (in Figures 4 and 5). So if we calculate $f_{OFFSET} T_A$, then this represents the offset in units of carrier spacings. We can consider it to consist of an integer part and a fractional part; the latter is what is indicated by the argument of the correlation pulse according to:

$$fractional\ part\ of\ (f_{OFFSET}\ T_A) = arg(pulse)/2\pi$$

With the arrangement of the first embodiment, as described above, any frequency offset at the input still affects the argument of the pulse (at the output of the running-average filter of Figure 6) but another angle is added. This is related to the arbitrary phase of the receiver's oscillator (making the $e^{-j2\pi fSHt}$ in Figure 6) as compared with the phase of the shift waveform as applied at the transmitter, together with the effect of the path delay. Thus an unknown angle is added to the angle caused by the frequency offset we wanted to measure, and thus nothing can be deduced from the pulse argument.

However, we have appreciated, this can be corrected, in effect by making two measurements which both incur the same unknown error, and then combining them so as to cancel out the unknown. This is the basis of the second embodiment. What we need is to make two measurements in such a way that the unknown can be cancelled, whilst not cancelling what we want to measure. We do this by adding another frequency-shifted part of the waveform, see Figure 7, in front of the existing parts A and B. For continuity of explanation, we will preserve the existing labelling for the original sections of the waveform, giving parts C, A and B in succession.

Part A is the original complete FFT symbol, parts B and C are the copies of all or part of A which are also subjected to frequency shifts. To give a concrete example, we could choose that C and B are subjected to the same upward shift in frequency (the amount in turn could conveniently equal one carrier spacing of the FFT used to make A). In effect we now have a downward shift between C and A, and an upward shift between A and B.

If we perform 'guard-interval correlation' on the waveform just described, using a correlation delay of $T_A$, then a correlation will result during the $T_C$-long period when the two parts of the waveform which are being compared are in C and the last part of A. Another correlation will result immediately afterwards, when the two parts of the waveform which are being compared are in the first part of A and in B. Both these correlations will be affected by the presence of the frequency shifts inserted in transmission. If the shifts in transmission are chosen as suggested, i.e. both C and B are shifted by the same amount in the same direction, then their effect at the receiver is of equal amount but in opposite directions. E.g. C (shifted up, say) precedes A (unshifted), but then A precedes B (shifted up).

A receiver implementation, according to the second embodiment is shown in Figure 8. This example implementation starts with a 'guard-interval correlator' of length $T_A$, similar to that previously shown Figures 4 and 6. The correlator output now feeds two frequency-shifter and running-average filter combinations. One shifter shifts up in frequency and the other down. In our example where both C and B are shifted up at the transmitter, it follows that the upper combination detects the correlation between C and A, and the lower combination detects the correlation between A and B.

Note that the up and down shifts are actually supplied by the very same oscillator and thus guaranteed to be related in phase; this would be arranged by generating, say, $e^{j2\pi fSHt}$ for the first shifter and then simply conjugating this to provide the necessary $e^{-j2\pi fSHt}$ for the second shifter. The correlation between A and B occurs $T_B$ later than that between C and A, so the upper filter output passes through a further $T_B$ delay before the two shift-and-filter outputs are multiplied. Each of the filter outputs is affected by an unknown rotation (as described above) which results from the arbitrary phase of the receiver's shift oscillator. However, as the very same receiver oscillator is used for both, but acting in opposite shift directions, the two suffer rotations in opposite directions. Multiplying the two thus causes the unknown rotation to be cancelled, achieving our objective. The desired rotation, caused by the frequency offset of the whole signal at the receiver, acts in the same direction for both paths. It follows that the argument of the final output pulse is double that given in the equation above.

The second embodiment as just described and illustrated in Figures 7 and 8 shares all the advantages specified in relation to the first embodiment, plus it eliminates the disadvantage given there. Thanks to cancelling out the unknown effect of receiver shift-oscillator phase, the argument of the output pulse can still be used to determine the 'fractional part' of the signal frequency offset.

Possible disadvantages are: the USDS is now longer in order to accommodate parts C, A and B instead of just A and B; and the complexity of detecting the USDS in the receiver is slightly increased.

As explained above, parts B and C of the USDS are the copies of all or part of A which are subjected to frequency shifts. A number of possible choices of the length of parts B and C are possible.

A first possibility is for parts B and C to be of equal length, each being half the length of A. For example, one arrangement is to arrange $T_C$, $T_A$, $T_B$ to be 512, 1024, 512 samples respectively, while using a running-average filter length $T_R$ of 512 samples and a matching $f_{SH}$ of 2 1 K carrier spacings. However, this can give unwanted correlations. The reason is that when two paths are separated by one-half of the period of $f_{SH}$, their correlation pulses are opposite in sign and thus tend to cancel where they overlap. So we get two discrete pulses of somewhat reduced amplitude.

A preferred alternative that avoids unwanted correlations has $T_C$ and $T_B$ of unequal length. For example, it is convenient to make them follow the relationship $T_C = 512 + K$, $T_B = 512 - K$, where K is a convenient small non-zero integer. Thus $T_C + T_B = 1024$, as before. The unwanted correlations initially decrease in amplitude quickly as K increases. A value of $K = 30$ seems to be suitable (but the optimum is very broad). This preferred alternative gives a distinct further improvement to the 'critical' delay case (now 512 samples).

In addition to various choices of length of B and C, there are also choices as to which part of portion A is used for the copies B and C. One possibility is that C is a copy of the last part of A, and B a copy of the first part of A. Thus in each case, the copy is separated by time Ta (equal to the length of A), from the corresponding point in A. This is just like the conventional formation of a guard interval except for the key difference of adding a frequency shift. Thus the delay length required in each of the 'guard-interval correlators', in this example, is also Ta.

Since Ta is the reciprocal of the carrier spacing, this means that when there is a frequency offset, each correlator's characteristic complex correlation pulse has argument equal to 2 Pi times the offset modulo the carrier spacing. In other words each potentially measures the fine frequency offset in the range -1/2 to +1/2 the carrier spacing. The correlators each potentially measure the offset, because each contains an unknown offset caused by the arbitrary phase of the oscillator used as the frequency shifter. This demonstrates an advantage of using two portions C as well as B; by combining the two correlator outputs in the way shown this unknown error is cancelled. However, the wanted measurement has its argument doubled, but we can still only determine it modulo 2 Pi. So in effect we now measure the fine component over the range -1/4 to +1/4 the carrier spacing, after which it wraps round and repeats.

The running average filter as used with either one or two frequency shifted guard interval portions, as explained above, could have a variety of lengths that are integer multiples of the period of the frequency shift imposed at the transmitter. One possibility is to match the guard interval length $T_C$ or $T_B$. Preferably, a longer $T_R$ (filter length) is used. In doing so we also choose a corresponding smaller $f_{SH} = 1/T_R$. We keep this reciprocal relationship in order that we get the intended benefits from the C-A-B structure, namely resistance to CW interferers and certain unwanted correlations with main signal features. We run a risk of making the correlation pulses a little noisier, since we add into the pulse noise from the parts of the correlation waveform close to but outside the true correlation region. Nevertheless we can get benefits. If we go to the conveniently round value of $T_R$ = 1024 samples (and a matching $f_{SH}$ of one 1 K carrier spacing) the potentially hazardous 0-dB echo length now becomes 512 samples. Since the pulses are in a sense less overlapped at this spacing, the seriousness of the cancellation is much reduced. We still get two discrete thin pulses, but their amplitude is much less reduced than for the previous proposal.

In summary, the embodiment of the two frequency shift proposal has a C-A-B structure for the transmitted P1 symbol. A is an OFDM symbol (1 K).

The lengths of the three parts are:

C: length TC = 512 + K samples
A: length TA = 1024 samples
B: length TB = 512 - K samples

CAB total length = 2048 samples whatever K is chosen. K = 30.

In the receiver, a running-average filter of length TR = 1024 samples is applied. This interacts with the specified $f_{SH}$ in such a way as to eliminate complex-constant terms, as are caused by CW interference and certain unwanted correlation conditions.

Several receiver structures are possible. The one shown in Figure 10 has the merit of minimising the complex multipliers while also corresponding to what you would expect in terms of shift directions. It is possible to re-arrange the structure (and e.g. trade numbers of multipliers for delay stages) but care then has to be taken to ensure that the arbitrary phase of the receiver shift oscillator is correctly cancelled by the CAB arrangement.

Extension to first and second embodiments

The part A of the USDS is chosen to be the FFT of one of a small number of different frequency-domain sequences, in order to use it to convey a very limited amount of information. In this case it was in order to indicate which FFT size (of a small possible number) was used for subsequent data symbols. This remains possible with either the first or second embodiment. However, another possibility arises, albeit also only suitable for a strictly limited number of cases.

This involves using one of a small selection of possible values of $f_{SH}$. The receiver implementations of Figures 6 and 8 will only respond to a USDS which has the same value of $f_{SH}$ imposed at the transmitter as is applied in the receiver detector. It follows that if a receiver contained parallel implementations with different shifts, it could indicate which had been transmitted and received.

This has a clear disadvantage of requiring the extra complexity of detecting all the possible values of $f_{SH}$ in parallel, but is counterbalanced by removing the need to distinguish sequences in the frequency domain following FFT demodulation of A, as is the case without this modification.

Whilst the embodiments have been described in relation to DVB COFDM signals, the invention could be applied to other signals such as mobile telephony, wireless networking or power-line communications. As will now be appreciated, the invention is applicable to any broadcast signal by including one or more elements that are repeated in the transmission (referred to herein as "symbols"). In signals other than DVB, the elements that are part-repeated may be referred to by other names but the principle of repetition of part of a signal with a frequency shift remains.

**Claims**

1. Apparatus (10) for producing a signal of the type comprising data symbols and unique signal discovery symbols, the symbols having an active symbol portion for broadcast, comprising:

   - means for providing a symbol having an active symbol portion;
   - means (30) for providing a repetition portion of at least part of the active symbol portion of the unique signal discovery symbol, the repetition portion being adjacent to the active symbol portion; **characterised by**
   - means for arranging the active symbol portion and the repetition portion of the unique signal-discovery symbol to be frequency shifted with respect to one another.

2. Apparatus according to claim 1, wherein the signal is an OFDM signal and the means for providing the symbol comprises a carrier frequency mapper (46) and an OFDM coder (50).

3. Apparatus according to claim 2, wherein the carrier frequency mapper (46) and OFDM coder (50) are arranged to produce the repetition portion by shifting the carrier frequency mapping for the repetition portion in relation to the active symbol portion.

4. Apparatus according to claim 2 or 3, wherein the carrier frequency mapper (46) and OFDM coder (50) are arranged to frequency shift the repetition portion and active portion with respect to one another for the discovery symbols but not for the data symbols.

5. Apparatus according to any preceding claim, in which the signal includes a further repetition portion, comprising:

   - means (30) for providing a further repetition portion of at least part of the symbol adjacent to the active symbol portion; and
   - means for arranging the active symbol portion and the further repetition portion to be frequency shifted with respect to one another.

6. Apparatus according to claim 5, wherein the repetition portion and further repetition portion are frequency shifted in the same sense with respect to the active symbol portion.

7. Apparatus according to claim 6, wherein the repetition portion and further repetition portion are frequency shifted by the same amount as each other.

8. Apparatus according to any preceding claim, wherein the signal is a digital television signal and each repetition portion of each symbol comprises a guard interval.

9. Apparatus according to any preceding claim, wherein the signal is a digital television signal and the apparatus is a digital television transmitter.

10. A digital television transmitter (10) for generating and transmitting a television signal of the type comprising an OFDM signal comprising a plurality of OFDM symbols each comprising an active symbol period and a guard interval period, at least one but not all of the symbols being a unique signal-discovery symbol, comprising:

    - channel coding section (14) for providing a digital bit stream for transmission,
    - a mapper (46) for mapping the bit stream to a plurality of sub-carriers to produce a digital representation of signals multiplexed on the sub-carriers,
    - an OFDM coder (50) for operating a Fourier transformation on the digital representation to produce an OFDM signal comprising symbols having active symbol periods,
    - a guard interval inserter (54) for inserting a guard interval having a guard interval period adjacent to each symbol, each guard interval comprising a repetition of at least a portion of the respective adjacent active symbol period,
    - **characterised in that** the mapper (46), OFDM coder (50) and guard interval inserter (54) are arranged to produce a unique signal-discovery symbol within the OFDM signal, the unique signal-discovery symbol comprising an active symbol period and guard interval period shifted in frequency with respect to one another.

11. A method for producing a signal of the type comprising data symbols and unique signal-discovery symbols, the symbols having an active symbol period for broadcast, comprising:

- providing a symbol having an active symbol portion;
- providing a repetition portion of at least part of the active symbol portion of the unique signal-discovery symbol, the repetition portion being adjacent to the active symbol portion; and **characterised by**
- arranging the active symbol portion and the repetition portion of the unique signal-discovery symbol to be frequency shifted with respect to one another.

12. A method according to claim 11, wherein signal is an OFDM signal and providing the symbol comprises using a carrier frequency mapper (46) and an OFDM coder (50).

13. A method according to claim 12, producing the repetition portion comprises using the carrier frequency mapper (46) and OFDM coder (50) to produce the repetition portion by shifting the carrier frequency mapping for the repetition portion in relation to the active symbol portion.

14. A method according to claim 11, 12 or 13, wherein the OFDM signal comprises data symbols and discovery symbols each comprising active symbol portions and repetition portions, comprising frequency shifting the repetition portion and active portion with respect to one another for the discovery symbols but not for the data symbols.

15. A method according to any of claims 11 to 14, in which the signal includes a further repetition portion, comprising:

- providing a further repetition portion of at least part of the symbol adjacent to the active symbol portion; and
- arranging the active symbol portion and the further repetition portion to be frequency shifted with respect to one another.

16. A method according to claim 15, wherein the repetition portion and further repetition portion are frequency shifted in the same sense with respect to the active symbol portion.

17. A method according to any of claims 11 to 16, wherein the signal is a digital television signal and each repetition portion of each symbol comprises a guard interval.

18. Apparatus (100) for processing a received signal of the type comprising data symbols and unique signal-discovery symbols, the unique signal-discovery symbols having an active symbol portion and a repetition portion adjacent to the active symbol portion being a repetition of at least part of the active symbol portion and having the active symbol portion and the repetition portion frequency shifted with respect to one another by a frequency shift, comprising:

- means for complex conjugate multiplying the received signal by a delayed version of the received signal;
- means for applying a frequency shift; and
- means for filtering over a filtering period related to the frequency shift.

19. Apparatus according to claim 18, wherein the signal is an OFDM signal and the means for complex conjugate multiplying the received signal by a delayed version of the received signal comprises a delay arranged to delay the signal by the period of the active symbol portion.

20. Apparatus according to claim 19, wherein the means for filtering comprises a running average filter with a period that related to an inverse multiple of the frequency shift.

21. Apparatus according to claim 18, 19 or 20, wherein the means for complex conjugate multiplying is prior to the means for applying a frequency shift.

22. Apparatus according to claim 18, 19 or 20, wherein means for applying a frequency shift is applied to the delayed version of the received signal and the means for complex conjugate multiplying is after the means for applying a frequency shift.

23. Apparatus according to any of claims 18 to 22, wherein the signal comprises a further repetition portion of at least part of the symbol adjacent to the active symbol portion frequency shifted with respect to the active symbol portion, comprising:

EP 2 220 837 B1

- further means for applying a frequency shift;
- further means for filtering over a filtering period related to the frequency shift; and means for multiplying outputs of such further means together.

24. Apparatus according to any of claims 18 to 23, wherein the signal is a digital television signal and the apparatus is a digital television receiver.

25. A digital television receiver (100) for receiving an OFDM television signal of the type comprising data symbols and unique signal-discovery symbols, each comprising an active symbol period and a guard interval period, the unique signal-discovery symbols having the frequency of the guard interval and active period frequency shifted with respect to one another, comprising:

- guard interval correlator arranged to complex conjugate multiply the received signal and a delayed version of the received signal;
- a frequency shifter arranged to apply complementary frequency shift; and
- a running average filter arranged to distinguish the correlation pulse from unwanted signal having time window period related to a multiple of the inverse of the frequency shift.

26. A method of processing a received signal of the type comprising data symbols and unique signal-discovery symbols, the unique signal-discovery symbols having an active symbol portion and a repetition portion adjacent to the active symbol portion being a repetition of at least part of the active symbol portion and having the active symbol portion and the repetition portion frequency shifted with respect to one another by a frequency shift, comprising:

- complex conjugate multiplying the received signal by a delayed version of the received signal;
- applying a frequency shift; and
- filtering over a filtering period related to the frequency shift.

27. A method according to claim 26, in which the signal is an OFDM signal comprising delaying the received signal by the period of the active symbol portion and then complex conjugate multiplying the received signal by a delayed version of the received signal.

28. A method according to claim 26 or 27, wherein the step of complex conjugate multiplying is prior to applying a frequency shift.

29. A method according to claim 26 or 27, wherein the step of applying a frequency shift is applied to the delayed version of the received signal and step of complex conjugate multiplying is after the step of applying a frequency shift.

30. A method according to any of claims 26 to 29, wherein the signal comprises a further repetition portion of at least part of the symbol adjacent to the active symbol portion frequency and shifted with respect to the active symbol portion, comprising:

applying a further frequency shift; and filtering over a further filtering period related to the frequency shift.

**Patentansprüche**

1. Vorrichtung (10) zum Erzeugen eines Signals des Typs, der Datensymbole und eindeutige Signalentdeckungssymbole umfasst, wobei die Symbole einen aktiven Symbolteil für Broadcast aufweisen, wobei die Vorrichtung Folgendes umfasst:

- Mittel zum Bereitstellen eines Symbols mit einem aktiven Symbolteil;
- Mittel (30) zum Bereitstellen eines Wiederholteils von wenigstens einem Teil des aktiven Symbolteils des eindeutigen Signalentdeckungssymbols, wobei sich der Wiederholteil neben dem aktiven Symbolteil befindet; **gekennzeichnet durch**
- Mittel zum Anordnen des aktiven Symbolteils und des Wiederholteils des eindeutigen Signalentdeckungssymbols so, dass sie mit Bezug zueinander frequenzverschoben sind.

2. Vorrichtung nach Anspruch 1, wobei das Signal ein OFDM-Signal ist und das Mittel zum Bereitstellen des Symbols einen Trägerfrequenzmapper (46) und einen OFDM-Codierer (50) umfasst.

3. Vorrichtung nach Anspruch 2, wobei der Trägerfrequenzmapper (46) und der OFDM-Codierer (50) so angeordnet sind, dass sie den Wiederholteil durch Verschieben des Trägerfrequenzmapping für den Wiederholteil relativ zum aktiven Symbolteil erzeugen.

4. Vorrichtung nach Anspruch 2 oder 3, wobei der Trägerfrequenzmapper (46) und der OFDM-Codierer (50) zum Frequenzverschieben des Wiederholteils und des aktiven Teils mit Bezug zueinander für die Entdeckungssymbole, aber nicht für die Datensymbole angeordnet sind.

5. Vorrichtung nach einem der vorherigen Ansprüche, wobei das Signal einen weiteren Wiederholteil beinhaltet, der Folgendes beinhaltet:

   - Mittel (30) zum Bereitstellen eines weiteren Wiederholteils von wenigstens einem Teil des Symbols neben dem aktiven Symbolteil; und
   - Mittel zum Anordnen des aktiven Symbolteils und des weiteren Wiederholteils so, dass sie frequenzverschoben mit Bezug zueinander sind.

6. Vorrichtung nach Anspruch 5, wobei der Wiederholteil und der weitere Wiederholteil in derselben Richtung mit Bezug auf den aktiven Symbolteil frequenzverschoben sind.

7. Vorrichtung nach Anspruch 6, wobei der Wiederholteil und der weitere Wiederholteil um denselben Betrag wie der andere frequenzverschoben sind.

8. Vorrichtung nach einem der vorherigen Ansprüche, wobei das Signal ein digitales Fernsehsignal ist und jeder Wiederholteil jedes Symbols ein Schutzintervall umfasst.

9. Vorrichtung nach einem der vorherigen Ansprüche, wobei das Signal ein digitales Fernsehsignal ist und die Vorrichtung ein digitaler Fernsehsender ist.

10. Digitaler Fernsehsender (10) zum Erzeugen und Senden eines Fernsehsignals des Typs, der ein OFDM-Signal umfasst, das mehrere OFDM-Symbole umfasst, die jeweils eine aktive Symbolperiode und eine Schutzintervallperiode umfassen, wobei wenigstens ein, aber nicht alle, Symbol ein eindeutiges Signalentdeckungssymbol ist, umfassend:

   - eine Kanalcodierungssektion (14) zum Bereitstellen eines digitalen Bitstroms zum Senden,
   - einen Mapper (46) zum Mappen des Bitstroms auf mehrere Subträger, um eine digitale Darstellung von auf den Subträgern multiplexierten Signalen zu erzeugen,
   - einen OFDM-Codierer (50) zum Durchführen einer Fourier-Transformation an der digitalen Darstellung, um ein OFDM-Signal zu erzeugen, das Symbole mit aktiven Symbolperioden umfasst,
   - ein Schutzintervall-Einfügungsglied (54) zum Einfügen eines Schutzintervalls mit einer Schutzintervallperiode neben jedem Symbol, wobei jedes Schutzintervall eine Wiederholung von wenigstens einem Teil der jeweiligen benachbarten aktiven Symbolperiode umfasst,
   - **dadurch gekennzeichnet, dass** der Mapper (46), der OFDM-Codierer (50) und das Schutzintervall-Einfügungsglied (54) zum Erzeugen eines eindeutigen Signalentdeckungssymbols in dem OFDM-Signal angeordnet sind, wobei das eindeutige Signalentdeckungssymbol eine aktive Symbolperiode und eine Schutzperiode umfasst, die mit Bezug zueinander frequenzverschoben sind.

11. Verfahren zum Erzeugen eines Signals des Typs, der Datensymbole und eindeutige Signalentdeckungssymbole mit einer aktiven Symbolperiode für Broadcast umfasst, wobei das Verfahren Folgendes beinhaltet:

   - Bereitstellen eines Symbols mit einem aktiven Symbolteil;
   - Bereitstellen eines Wiederholteils von wenigstens einem Teil des aktiven Symbolteils des eindeutigen Signalentdeckungssymbols, wobei sich der Wiederholteil neben dem aktiven Symbolteil befindet; und **gekennzeichnet durch**
   - Anordnen des aktiven Symbolteils und des Wiederholteils des eindeutigen Signalentdeckungssymbols so, dass sie mit Bezug zueinander frequenzverschoben sind.

12. Verfahren nach Anspruch 11, wobei das Signal ein OFDM-Signal ist und das Bereitstellen des Symbols die Verwendung eines Trägerfrequenzmappers (46) und eines OFDM-Codierers (50) beinhaltet.

13. Verfahren nach Anspruch 12, wobei das Erzeugen des Wiederholteils die Verwendung des Trägerfrequenzmappers (46) und des OFDM-Codierers (50) beinhaltet, um den Wiederholteil durch Verschieben des Trägerfrequenzmapping für den Wiederholteil relativ zu dem aktiven Symbolteil zu erzeugen.

14. Verfahren nach Anspruch 11, 12 oder 13, wobei das OFDM-Signal Datensymbole und Entdeckungssymbole umfasst, die jeweils aktive Symbolteile und Wiederholteile beinhalten, umfassend das Frequenzverschieben des Wiederholteils und des aktiven Teils mit Bezug zueinander für die Entdeckungssymbole, aber nicht für die Datensymbole.

15. Verfahren nach einem der Ansprüche 11 bis 14, wobei das Signal ferner einen Wiederholteil beinhaltet, das Folgendes beinhaltet:

   - Bereitstellen eines weiteren Wiederholteils von wenigstens einem Teil des Symbols neben dem aktiven Symbolteil; und
   - Anordnen des aktiven Symbolteils und des weiteren Wiederholteils, so dass sie mit Bezug zueinander frequenzverschoben sind.

16. Verfahren nach Anspruch 15, wobei der Wiederholteil und der weitere Wiederholteil in derselben Richtung mit Bezug auf den aktiven Symbolteil frequenzverschoben werden.

17. Verfahren nach einem der Ansprüche 11 bis 16, wobei das Signal ein digitales Fernsehsignal ist und jeder Wiederholteil jedes Symbols ein Schutzintervall beinhaltet.

18. Vorrichtung (100) zum Verarbeiten eines empfangenen Signals des Typs, der Datensymbole und eindeutige Signalentdeckungssymbole umfasst, wobei die eindeutigen Signalentdeckungssymbole einen aktiven Symbolteil umfassen und wobei ein Wiederholteil neben dem aktiven Symbolteil eine Wiederholung von wenigstens einem Teil des aktiven Symbolteils ist, und wobei der aktive Symbolteil und der Wiederholteil mit Bezug zueinander durch einen Frequenzschieber frequenzverschoben werden, der Folgendes umfasst:

   - Mittel zum Multiplizieren des komplexen Konjugats des empfangenen Signals mit einer verzögerten Version des empfangenen Signals;
   - Mittel zum Anwenden einer Frequenzverschiebung; und
   - Mittel zum Filtern über eine Filterungsperiode relativ zu der Frequenzverschiebung.

19. Vorrichtung nach Anspruch 18, wobei das Signal ein OFDM-Signal ist und das Mittel zum Multiplizieren des komplexen Konjugats des empfangenen Signals mit einer verzögerten Version des empfangenen Signals eine Verzögerung beinhaltet, die so gewählt ist, dass das Signal um die Periode des aktiven Symbolteils verzögert wird.

20. Vorrichtung nach Anspruch 19, wobei das Mittel zum Filtern ein Laufender-Durchschnitt-Filter mit einer Periode umfasst, die auf ein umgekehrtes Vielfaches der Frequenzverschiebung bezogen ist.

21. Vorrichtung nach Anspruch 18, 19 oder 20, wobei sich das Mittel zum Multiplizieren des komplexen Konjugats vor dem Mittel zum Anwenden einer Frequenzverschiebung befindet.

22. Vorrichtung nach Anspruch 18, 19 oder 20, wobei das Mittel zum Anwenden einer Frequenzverschiebung auf die verzögerte Version des empfangenen Signals angewendet wird und das Mittel zum Multiplizieren des komplexen Konjugats sich hinter dem Mittel zum Anwenden einer Frequenzverschiebung befindet.

23. Vorrichtung nach einem der Ansprüche 18 bis 22, wobei das Signal einen weiteren Wiederholteil von wenigstens einem Teil des Symbols neben dem aktiven Symbol umfasst, mit Bezug auf den aktiven Symbolteil frequenzverschoben, wobei die Vorrichtung Folgendes umfasst:

   - weitere Mittel zum Anwenden einer Frequenzverschiebung; - weitere Mittel zum Filtern über eine Filterungsperiode in Bezug auf die Frequenzverschiebung;
   und Mittel zum Multiplizieren von Ausgängen solcher weiteren Mittel miteinander.

**24.** Vorrichtung nach einem der Ansprüche 18 bis 23, wobei das Signal ein digitales Fernsehsignal ist und die Vorrichtung ein digitaler Fernsehempfänger ist.

**25.** Digitaler Fernsehempfänger (100) zum Empfangen eines OFDM-Fernsehsignals des Typs, der Datensymbole und eindeutige Signalentdeckungssymbole umfasst, die jeweils eine aktive Symbolperiode und eine Schutzintervallperiode umfassen, wobei die Frequenz des Schutzintervalls und die Frequenz der aktiven Periode der eindeutigen Signalentdeckungssymbole mit Bezug zueinander frequenzverschoben sind, der Folgendes umfasst:

- einen Schutzintervall-Korrelator zum Multiplizieren des komplexen Konjugats des empfangenen Signals und einer verzögerten Version des empfangenen Signals;
- einen Frequenzschieber zum Anwenden einer komplementären Frequenzverschiebung; und
- ein Laufender-Durchschnitt-Filter zum Unterscheiden des Korrelationsimpulses von unerwünschten Signalen mit einer Zeitfensterperiode, die auf ein Vielfaches der Umkehr der Frequenzverschiebung bezogen ist.

**26.** Verfahren zum Verarbeiten eines empfangenen Signals des Typs, der Datensymbole und eindeutige Signalentdeckungssymbole umfasst, wobei die eindeutigen Signalentdeckungssymbole einen aktiven Symbolteil umfassen und wobei ein Wiederholteil neben dem aktiven Symbolteil eine Wiederholung von wenigstens einem Teil des aktiven Symbolteils ist und wobei deren aktiver Symbolteil und Wiederholteil mit Bezug zueinander durch eine Frequenzverschiebung frequenzverschoben werden, die Folgendes beinhaltet:

- Multiplizieren des komplexen Konjugats des empfangenen Signals mit einer verzögerten Version des empfangenen Signals;
- Anwenden einer Frequenzverschiebung; und
- Filtern über eine Filterungsperiode relativ zu der Frequenzverschiebung.

**27.** Verfahren nach Anspruch 26, wobei das Signal ein OFDM-Signal ist, das das Verzögern des empfangenen Signals um die Periode des aktiven Symbolteils und dann das Multiplizieren des komplexen Konjugats des empfangenen Signals mit einer verzögerten Version des empfangenen Signals beinhaltet.

**28.** Verfahren nach Anspruch 26 oder 27, wobei der Schritt des Multiplizierens des komplexen Konjugats vor dem Anwenden einer Frequenzverschiebung erfolgt.

**29.** Verfahren nach Anspruch 26 oder 27, wobei der Schritt des Anwendens einer Frequenzverschiebung auf die verzögerte Version des empfangenen Signals angewendet wird und der Schritt des Multiplizierens des komplexen Konjugats nach dem Schritt des Anwendens einer Frequenzverschiebung erfolgt.

**30.** Verfahren nach einem der Ansprüche 26 bis 29, wobei das Signal einen weiteren Wiederholteil von wenigstens einem Teil des Symbols neben der Frequenz des aktiven Symbolteils und mit Bezug auf den aktiven Symbolteil frequenzverschoben umfasst, das Folgendes beinhaltet:

Anwenden einer weiteren Frequenzverschiebung; und Filtern über eine weitere Filterperiode relativ zu der Frequenzverschiebung.

## Revendications

**1.** Appareil (10) pour produire un signal du type comprenant des symboles de données et des symboles de découverte de signal uniques, les symboles ayant une partie de symbole active destinée à être diffusée, comprenant :

- un moyen pour fournir un symbole ayant une partie de symbole active ;
- un moyen (30) pour fournir une partie de répétition d'au moins une partie de la partie de symbole active du symbole de découverte de signal unique, la partie de répétition étant adjacente à la partie de symbole active ;
**caractérisé par**
- un moyen pour agencer la partie de symbole active et la partie de répétition du symbole de découverte de signal unique de façon à ce qu'elles soient décalées en fréquence l'une par rapport à l'autre.

**2.** Appareil selon la revendication 1, dans lequel le signal est un signal OFDM et le moyen de fourniture du symbole comprend un mappeur de fréquences porteuses (46) et un codeur OFDM (50).

**3.** Appareil selon la revendication 2, dans lequel le mappeur de fréquences porteuses (46) et le codeur OFDM (50) sont agencés pour produire la partie de répétition en décalant le mappage de fréquence porteuse de la partie de répétition par rapport à la partie de symbole active.

**4.** Appareil selon la revendication 2 ou 3, dans lequel le mappeur de fréquences porteuses (46) et le codeur OFDM (50) sont agencés pour décaler en fréquence la partie de répétition et la partie active l'une par rapport à l'autre pour les symboles de découverte mais pas pour les symboles de données.

**5.** Appareil selon l'une quelconque des revendications précédentes, dans lequel le signal comporte une autre partie de répétition, comprenant :

- un moyen (30) pour fournir une autre partie de répétition d'au moins une partie du symbole adjacent à la partie de symbole active ; et
- un moyen pour agencer la partie de symbole active et l'autre partie de répétition afin qu'elles soient décalées en fréquence l'une par rapport à l'autre.

**6.** Appareil selon la revendication 5, dans lequel la partie de répétition et l'autre partie de répétition sont décalées en fréquence dans le même sens par rapport à la partie de symbole active.

**7.** Appareil selon la revendication 6, dans lequel la partie de répétition et l'autre partie de répétition sont décalées en fréquence par la même quantité l'une et l'autre.

**8.** Appareil selon l'une quelconque des revendications précédentes, dans lequel le signal est un signal de télévision numérique et chaque partie de répétition de chaque symbole comprend un intervalle de garde.

**9.** Appareil selon l'une quelconque des revendications précédentes, dans lequel le signal est un signal de télévision numérique et l'appareil est un émetteur de télévision numérique.

**10.** Emetteur de télévision numérique (10) pour générer et émettre un signal de télévision du type comprenant un signal OFDM comprenant une pluralité de symboles OFDM comprenant chacun une période de symbole active et une période d'intervalle de garde, au moins l'un des symboles, mais pas tous, étant un symbole de découverte de signal unique, comprenant :

- une section de codage de canal (14) pour fournir un flux binaire numérique à transmettre,
- un mappeur (46) pour mapper le flux binaire avec une pluralité de sous-porteuses afin de produire une représentation numérique de signaux mutliplexés sur les sous-porteuses,
- un codeur OFDM (50) pour effectuer une transformation de Fourier sur la représentation numérique afin de produire un signal OFDM comprenant des symboles ayant des périodes de symbole actives,
- un dispositif d'insertion d'intervalle de garde (54) pour insérer un intervalle de garde ayant une période d'intervalle de garde adjacente à chaque symbole, chaque intervalle de garde comprenant une répétition d'au moins une partie de la période de symbole active adjacente respective,
- **caractérisé en ce que** le mappeur (46), le codeur OFDM (50) et le dispositif d'insertion d'intervalle de garde (54) sont agencés pour produire un symbole de découverte de signal unique dans le signal OFDM, le symbole de découverte de signal unique comprenant une période de symbole active et une période d'intervalle de garde décalées en fréquence l'une par rapport à l'autre.

**11.** Procédé de production d'un signal du type comprenant des symboles de données et des symboles de découverte de signal uniques, les symboles ayant une partie de symbole active destinée à être diffusée, comprenant :

- la fourniture d'un symbole ayant une partie de symbole active ;
- la fourniture d'une partie de répétition d'au moins une partie de la partie de symbole active du symbole de découverte de signal unique, la partie de répétition étant adjacente à la partie de symbole active ; et **caractérisé par**
- l'agencement de la partie de symbole active et de la partie de répétition du symbole de découverte de signal unique en vue de leur décalage en fréquence l'une par rapport à l'autre.

**12.** Procédé selon la revendication 11, dans lequel le signal est un signal OFDM et la fourniture du symbole comprend un mappeur de fréquences porteuses (46) et un codeur OFDM (50).

**13.** Procédé selon la revendication 12, dans lequel la partie de répétition comprend l'utilisation du mappeur de fréquences porteuses (46) et du codeur OFDM (50) pour produire la partie de répétition en décalant le mappage de fréquence porteuse de la partie de répétition par rapport à la partie de symbole active.

**14.** Procédé selon la revendication 11, 12 ou 13, dans lequel le signal OFDM comprend des symboles de données et des symboles de découverte comprenant chacun des parties de symbole actives et des parties de répétition, comprenant le décalage en fréquence de la partie de répétition et de la partie active l'une par rapport à l'autre pour les symboles de découverte mais pas pour les symboles de données.

**15.** Procédé selon l'une quelconque des revendications 11 à 14, dans lequel le signal comporte une autre partie de répétition, comprenant :

- la fourniture d'une autre partie de répétition d'au moins une partie du symbole adjacent à la partie de symbole active ; et
- l'agencement de la partie de symbole active et de l'autre partie de répétition afin qu'elles soient décalées en fréquence l'une par rapport à l'autre.

**16.** Procédé selon la revendication 15, dans lequel la partie de répétition et l'autre partie de répétition sont décalées en fréquence dans le même sens par rapport à la partie de symbole active.

**17.** Procédé selon l'une quelconque des revendications 11 à 16, dans lequel le signal est un signal de télévision numérique et chaque partie de répétition de chaque symbole comprend un intervalle de garde.

**18.** Appareil (100) pour traiter un signal reçu du type comprenant des symboles de données et des symboles de découverte de signal uniques, les symboles ayant une partie de symbole active et une partie de répétition adjacente à la partie de symbole active étant une répétition d'au moins une partie de la partie de symbole active, la partie de symbole active et la partie de répétition étant décalées en fréquence l'une par rapport à l'autre par un décalage de fréquence, comprenant :

- un moyen de multiplication sur conjugué complexe le signal reçu par une version retardée du signal reçu ;
- un moyen d'application d'un décalage de fréquence ; et
- un moyen de filtrage durant une période de filtrage liée au décalage de fréquence.

**19.** Appareil selon la revendication 18, dans lequel le signal est un signal OFDM et le moyen de multiplication sur conjugué complexe du signal reçu par une version retardée du signal reçu comprend un retard agencé pour retarder le signal par la période de la partie de symbole active.

**20.** Appareil selon la revendication 19, dans lequel le moyen de filtrage comprend un filtre à moyenne mobile ayant une période liée à un multiple inverse du décalage de fréquence.

**21.** Appareil selon la revendication 18, 19 ou 20, dans lequel le moyen de multiplication sur conjugué complexe est antérieur au moyen d'application d'un décalage de fréquence.

**22.** Appareil selon la revendication 18, 19 ou 20, dans lequel le moyen d'application d'un décalage de fréquence est appliqué à la version retardée du signal reçu et le moyen de multiplication sur conjugué complexe est postérieur au moyen d'application d'un décalage de fréquence.

**23.** Appareil selon l'une quelconque des revendications 18 à 22, dans lequel le signal comprend une autre partie de répétition d'au moins une partie du symbole adjacente à la partie de symbole active décalée en fréquence par rapport à la partie de symbole active, comprenant :

- un moyen supplémentaire d'application d'un décalage de fréquence ;
- un moyen supplémentaire de filtrage durant une période de filtrage liée au décalage de fréquence ; et un moyen de multiplication des sorties de ces moyens supplémentaires.

**24.** Appareil selon l'une quelconque des revendications 18 à 23, dans lequel le signal est un signal de télévision numérique et l'appareil est un récepteur de télévision numérique.

**25.** Récepteur de télévision numérique (100) pour recevoir un signal de télévision OFDM du type comprenant des symboles de données et des symboles de découverte de signal uniques, comprenant chacun une période de symbole active et une période d'intervalle de garde, les symboles de découverte de signal uniques ayant la fréquence de l'intervalle de garde et la fréquence de période active décalées l'une par rapport à l'autre, comprenant :

- un corrélateur d'intervalle de garde agencé pour multiplier sur conjugué complexe le signal reçu et une version retardée du signal reçu ;
- un dispositif de décalage de fréquence agencé pour appliquer un décalage de fréquence complémentaire ; et
- un filtre à moyenne mobile agencé pour différencier l'impulsion de corrélation d'un signal parasite ayant une période de fenêtre de temps liée à un multiple de l'inverse du décalage de fréquence.

**26.** Procédé de traitement d'un signal reçu du type comprenant des symboles de données et des symboles de découverte de signal uniques, les symboles de découverte de signal uniques ayant une partie de symbole active et une partie de répétition adjacente à la partie de symbole active étant une répétition d'au moins une partie de la période de symbole active, la partie de symbole active et la partie de répétition étant décalées en fréquence l'une par rapport à l'autre par un décalage de fréquence, comprenant :

- la multiplication sur conjugué complexe du signal reçu par une version retardée du signal reçu ;
- l'application d'un décalage de fréquence ; et
- le filtrage durant une période de filtrage liée au décalage de fréquence.

**27.** Procédé selon la revendication 26, dans lequel le signal est un signal OFDM comprenant le retard du signal reçu par la période de la partie de symbole active puis la multiplication sur conjugué complexe du signal reçu par une version retardée du signal reçu.

**28.** Procédé selon la revendication 26 ou 27, dans lequel l'étape de multiplication sur conjugué complexe est antérieure à l'application d'un décalage de fréquence.

**29.** Procédé selon la revendication 26 ou 27, dans lequel l'étape d'application d'un décalage de fréquence est appliquée à la version retardée du signal reçu et l'étape de multiplication sur conjugué complexe est postérieure à l'étape d'application d'un décalage de fréquence.

**30.** Procédé selon l'une quelconque des revendications 26 à 29, dans lequel le signal comprend une autre partie de répétition d'au moins une partie du symbole adjacente à la partie de symbole active et décalée en fréquence par rapport à la partie de symbole active, comprenant :

l'application d'un autre décalage de fréquence et le filtrage durant une autre période de filtrage liée au décalage de fréquence.

FIG. 1

100

102

| TUNER | | ADC | | OFDM DECODER (FFT) | | CHANNEL EQUALISER | | METRIC ASSIGNMENT (CSI) AND DEMAPPING (QPSK/16-QAM/64-QAM) |

104    106    108    110    112

120

| INNER DEINTERLEAVER (SYMBOL BASED) | | VITERBI (INNER PCC) DECODER | | OUTER (CONVOLUTIONAL) DEINTERLEAVER (PACKET BASED) | | OUTER DECODER (RS) |

122    124    126    128

| ENERGY DISPERSAL REMOVAL | | MPEG-2 DEMUX (TS) | | MPEG-2 DECODER | 140

132    130    134    136

PRBS

138

FIG. 2

UNIQUE SIGNAL-DISCOVERY SYMBOL
(COMPRISING PARTS A AND B) $T_B$ (NOTE: $T_B = \Delta_{USDS} T_A$)

| - - - | DATA SYMBOL $D_N$ | | A | B | DATA SYMBOL $D_1$ | | - - - |

$T_A$

DATA-SYMBOL
GUARD INTERVAL

## FIG. 3

COMPLEX
MULTIPLIER,
WITH ONE INPUT
CONJUGATED

DELAY $T_A$ → *X → RUNNING-AVERAGE
FILTER, LENGTH $T_B$

## FIG. 4

UNIQUE SIGNAL-DISCOVERY SYMBOL
(COMPRISING PARTS A AND B)

$T_B$ (NOTE: $T_B = \Delta_{USDS} T_A$)

DATA SYMBOL $D_N$ | A | B | DATA SYMBOL $D_1$

$T_A$

FREQUENCY-SHIFTED COPY OF ALL OR FIRST PART ONLY OF A

DATA-SYMBOL GUARD INTERVAL

## FIG. 5

COMPLEX MULTIPLIER, WITH ONE INPUT CONJUGATED

DELAY $T_A$ → *X → X → RUNNING-AVERAGE FILTER, LENGTH $T_B$

$e^{-j2\pi fSHt}$

## FIG. 6

FREQUENCY-SHIFTED
COPY OF ALL OR LAST
PART ONLY OF A

DATA SYMBOL D$_N$ | C | A | B | DATA SYMBOL D$_1$

$T_A$

FREQUENCY-SHIFTED
COPY OF ALL OR FIRST
PART ONLY OF A

DATA-SYMBOL
GUARD INTERVAL

## FIG. 7

COMPLEX
MULTIPLIER,
WITH ONE INPUT
CONJUGATED

INPUT → DELAY T$_A$ → *X

RUNNING-AVERAGE
FILTER, LENGTH T$_B$ → DELAY T$_B$

$e^{-j2\pi fSHt}$

RUNNING-AVERAGE
FILTER, LENGTH T$_B$

X → OUTPUT

$e^{-j2\pi fSHt}$

## FIG. 8

INPUT TO
G-IC DELAY:

| DIRECT PATH | SYMBOL R | SYMBOL R+1 | SYMBOL R+2 | |
| DELAYED PATH | SYMBOL R | SYMBOL R+1 | SYMBOL R+2 |

OUTPUT TO
G-IC DELAY:

$T_A$

( THESE TWO ARE ALWAYS PERFECTLY CORRELATED )

| DIRECT PATH | SYMBOL R | SYMBOL R+1 | SYMBOL R+2 |
| DELAYED PATH | SYMBOL R | SYMBOL R+1 | SYMBOL R+2 |

## FIG. 9

INPUT

DELAY $T_C$ → *X → RUNNING-AVERAGE FILTER $T_R$ → DELAY $T_A$

X

DOWN-SHIFTER

$e^{-j2\pi fSHt}$

DELAY $T_B$ → *X → RUNNING-AVERAGE FILTER $T_R$ → X → OUTPUT

COMPLEX
MULTIPLIER,
WITH ONE INPUT
CONJUGATED

## FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1406402 A

**Non-patent literature cited in the description**

- **BAOGUO YANG et al.** Burst frame synchronization for OFDM transmission In multipath fading links. *VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA, IEEE, US,* 19 September 1999, vol. 1, 300-304